# EUROPÄISCHE PATENTSCHRIFT

(11) **EP 1 022 531 B1**
(45) Veröffentlichungstag und Bekanntmachung des Hinweises auf die Patenterteilung: **04.08.2004**
(21) Anmeldenummer: 99124375.9
(22) Anmeldetag: 07.12.1999
(51) Int. Cl.: F26B 17/12, F26B 21/06

(54) **Verfahren zum Aufheizen von Schüttgütern, insbesondere Kunststoffgranulat**
Process for heating bulk materials, particularly plastic granules
Procédé de chauffage de matières en vrac, notamment de granules en matière plastique

(30) Priorität: 21.01.1999 DE 19902327
(43) Veröffentlichungstag der Anmeldung: 26.07.2000
(73) Patentinhaber: Mann + Hummel ProTec GmbH, 71636 Ludwigsburg (DE)
(72) Erfinder: Becker, Achim, 64293 Darmstadt (DE); Zlotos, Michael, 74348 Lauffen (DE)
(74) Vertreter: Voth, Gerhard, Dipl.-Ing.

(56) Entgegenhaltungen:
- EP-A- 0 487 829
- DE-A- 3 320 978
- DE-A- 3 929 858
- DE-A- 3 936 008
- DE-A- 4 015 001
- DE-A- 4 234 696
- DE-A- 4 236 309
- DE-B- 1 241 366
- DE-C- 3 809 749
- DE-U- 29 621 313

## Beschreibung

Die Erfindung betrifft ein Verfahren zum Aufheizen von Schüttgütern, insbesondere Kunststoffgranulat.

Aus der DE 31 31 471 ist ein Verfahren bekannt, bei welchem ein Schüttgut in einem Trocknungsbehälter aufgeheizt und getrocknet wird. Hierzu sind mit Adsorptionsmittel gefüllte Kammern vorgesehen. In einem geschlossenen Kreislauf wird die Trockenluft dem Trocknungsbehälter zugeleitet, wobei die Kammern in zeitlichen Abständen mit einem zweiten Luftkreislauf regeneriert werden. Zum Trocknen des Schüttguts wird die entfeuchtete Luft aufgeheizt, strömt durch das Schüttgut hindurch und wird anschließend entfeuchtet.

Im Sonderdruck "Maschinenmarkt", 81. Jahrgang, Heft 90 vom 11. November 1975 sind ferner zwei Trocknungsprinzipien für das Trocknen von Granulat erläutert, und zwar einerseits mit einem Warmlufttrockner und andererseits mit einem Trockenlufttrockner. Warmlufttrockner sind zum Trocknen von hygroskopischem Granulat ungeeignet, weil hier der Trocknungsprozeß von der Feuchte der Umgebungsluft abhängt. Außerdem ist ihre Energiebilanz schlecht, weil die in der Abluft enthaltene Wärme für den Prozeß verlorengeht. Grundsätzlich können solche Schüttguttrockner auch für das Aufheizen von Kunststoffgranulat verwendet werden. Der Nachteil bei den Schüttguttrocknern besteht jedoch darin, daß die Verweilzeit des Schüttgutes im Trocknungsbehälter relativ lang ist und damit die Gefahr besteht, daß das Schüttgut, insbesondere das Kunststoffgranulat, thermisch geschädigt wird.

Aus der DE-A 39 36 008 ist ein Verfahren zum Trocknen von Gut, insbesondere von Kunststoffgranulat bekannt. Bei diesem wird die Trocknungstemperatur in Abhängigkeit vom Durchsatz des Gutes geregelt und bei längerer Trocknungszeit die Trocknungstemperatur erniedrigt. Das Schüttgut, welches zu trocknen ist, verbleibt über die gesamte Trocknungszeit im Behälter.

Der Erfindung liegt die Aufgabe zugrunde, die beschriebenen Nachteile zu vermeiden und ein Verfahren zum Aufheizen von Schüttgütern, insbesondere Kunststoffgranulat zu schaffen, das materialschonend arbeitet und wirtschaftlich angewendet werden kann.

Diese Aufgabe wird gemäß den Merkmalen des Anspruchs 1 gelöst.

Der Vorteil der Erfindung liegt darin, daß ein Behälter für das Schüttgut gewählt wird, durch welchen das Schüttgut quasi kontinuierlich durchfließt. In Abhängigkeit der Schüttgutgranulatgröße ist eine Mindestverweildauer im Behälter notwendig, um dieses bis zum Kern durchzuheizen. Rein rechnerisch ergibt sich beispielsweise bei handelsüblichen Kunststoffgranulaten eine theoretische Verweildauer von einigen Sekunden, so daß es zweckmäßig ist, eine Verweilzeit von ca. 2 bis 5 Minuten anzustreben.

Hierzu werden gemäß der Erfindung verschiedene alternative Verfahren aufgezeigt. So ist es vorteilhaft, Materialstrom und Wärmeträgergasstrom parallel zu führen und die Gaseintrittstemperatur derart zu variieren, daß die Materialaustrittstemperatur der Solltemperatur entspricht. Es besteht auch die Möglichkeit, anstelle der Gaseintrittstemperatur die Gasmenge zu variieren, so daß die Materialaustrittstemperatur der Solltemperatur entspricht.

Bei dem erfindungsgemäßen Verfahren zum Aufheizen von Schüttgütern befinden sich der Wärmeträgergasstrom und die Endtemperatur des aufzuheizenden Mediums nicht im thermischen Gleichgewicht befinden. Die Temperatur des Gasstroms ist damit wesentlich höher als die Endtemperatur des aufzuheizenden Materials.

Alternativ kann der Wärmeträgergasstrom gegen die Richtung des Materialstromes geführt werden. Auch hier sind wiederum zwei Verfahrensvarianten möglich, zum einen die Regelung der Gaseintrittstemperatur, zum anderen die Regelung der Gasmenge derart, daß die Materialaustrittstemperatur der Solltemperatur entspricht.

In einer Ausgestaltung der Erfindung wird vorgeschlagen, einen Temperaturfühler zur Variation der Gastemperatur oder der Gasmenge in der Abluft des Wärmeträgergases bzw. in der Abluftleitung des Wärmeträgergases vorzusehen, der die Temperatur der Abluft mißt, so daß daraus die Materialtemperatur ermittelt werden kann.

Eine weitere Ausgestaltung der Erfindung sieht vor, die Regelgröße zur Variation von Gastemperatur oder Gasmenge von einem Materialtemperaturfühler ermitteln zu lassen, der in einem unteren, nicht vom Gas durchströmten Bereich des Behälters angeordnet ist.

Zur Optimierung des gesamten Prozesses und zur Vermeidung von Wärmeverlusten im Material wird in einer weiteren Ausgestaltung der Erfindung vorgeschlagen, den Behälter mit einer sogenannten dynamischen Isolation zu versehen. Dies geschieht dadurch, daß die abströmende Prozeßluft, d. h. die Austrittsluft über die Außenhülle des Behälters geführt ist. Hierzu ist der Behälter mit einer zweiten Hülle versehen.

Die Erfindung wird nachfolgend anhand von Ausführungsbeispielen näher erläutert. Es zeigen
- Figuren 1 bis 4: ein Gerät zum Auf- bzw. Nachheizen von Schüttgütern in verschiedenen Varianten,
- Figur 5: Gesamtschaubild einer Kunststoffverarbeitungsanlage.

Das Gerät und das Verfahren zum Aufheizen bzw. Nachheizen von Schüttgütern eignet sich besonders für Kunststoffgranulate, die z. B. nach einem Trocknungsprozeß auf eine höhere Temperatur gebracht werden müssen, wobei bei einer Trocknung mit Trockenluft als Wärmeträgerstrom ein Teilstrom der Trockenluft verwendet werden kann und dieser im Prozeß im Kreislauf parallel zur Trockenmluftmenge geführt wird.

Im Gegensatz zu derzeit genutzten Verfahren, bei denen in einer solchen Aufgabenstellung Prozeßgase verwendet werden, deren Temperatur der Endtemperatur des aufzuheizenden Kunststoffes entspricht, ist es möglich, wesentlich geringere Luftmengen für den Nachheizprozeß zu verwenden. Besonders positiv stellt sich die Energiebilanz des Gesamtprozesses mit dieser Erfindung dar.

Ein Vergleich mit einem konventionellen Verfahren zeigt folgende Unterschiede:

Eine Aufgabe besteht darin, eine Menge von 100 kg Kunststoffgranulat von einer Lagertemperatur 20 °C auf Trocknungstemperatur 140 °C aufzuheizen und zu trocknen, wobei die ideale Verarbeitungstemperatur bei 170 °C liegt. Aufgrund langer Trocknungszeiten muß das Granulat bei dieser Temperatur 6 Stunden lang getrocknet werden. Dies ist nicht möglich, da thermischer Abbau eintreten kann.

Bisher wurde das Material in einem Trocknungsbehälter, der ein Fassungsvermögen von 600 kg (6 Stunden x 100 kg) permanent mit einer Luftmenge in Abhängigkeit der spezifischen Wärme des Kunststoffes z. B. 160 Nm³/h und einer Temperatur von 140 °C durchströmt. Danach wird das Material in einen Nachheizbehälter gefördert, bei dem die Lufttemperatur der Nachheiztemperatur 170 °C entspricht. Da die mittlere spezifische Wärme des Granulates zwischen 140 °C und 170 ° höher liegt als zwischen 20 °C und 140 °C und die Ablufttemperatur im Idealfall gleich der Materialeintrittstemperatur ist, muß die durchgesetzte Luftmenge im Nachheiztrichter etwas höher liegen als im vorgeschalteten Trocknungsprozeß. Daraus folgt eine Luftmenge für den Nachheizprozeß von mindestens 180 Nm³/h. Da aber auch das Nachheizverfahren bei hygroskopischen Kunststoffen, besonders bei PET auch unter trockener Atmosphäre stattfinden muß, sind beide Rückluftströme zusammenzufassen und in einem Adsorptionstrockner zu entfeuchten. Problematisch hierbei ist die mittlere Temperatur der Gesamtrückluft, da die Adsorptionsfähigkeit von Trockenlufttrocknern auf Zeolithbasis temperaturabhängig ist. Die Gesamtluftmenge, die eine mittlere Temperatur von ca. 85 °C aufweist, muß, bevor sie im Zeolith entfeuchtet wird, auf eine Temperatur von ca. 40 °C abgekühlt werden. Nach der Trocknung müssen dann die jeweiligen Teilströme wieder auf die Prozeßtemperaturen aufgeheizt werden.

Gemäß dem vorgeschlagenen Verfahren sind Temperaturen und Luftmengen für den Trocknungsprozeß identisch der obengenannten Berechnung, d. h. die Trocknungstemperatur beträgt 140 °C, die Nachheiztemperatur 170 °C. Unterschiedlich ist jedoch die Luftmenge für den Nachheizprozeß, in diesem Fall beträgt sie lediglich 30 Nm³/h. Die sich einstellende Prozeßabluft ist abhängig vom gewählten Verfahren, wird jedoch 170 °C nicht übersteigen. Hieraus ergibt sich eine mittlere Gesamtlufttemperatur der Abluft von 45 °C. Dadurch zeichnet sich eine deutliche Energieersparnis für Kühlung und Aufheizprozeß ab.

Ziel bzw. Regelgröße des gesamten Prozesses ist die konstante Granulataustrittstemperatur für einen Nachfolgeprozeß. Diese wird in Abhängigkeit des eingesetzten Verfahrens beim Gleichstromverfahren durch einen Temperatursensor im ausströmenden Gas oder beim Gegenstromverfahren mittels eines Temperatursensors im unteren, nicht vom Gas durchströmten Behälterbereich im Granulatstrom erfaßt und geregelt.

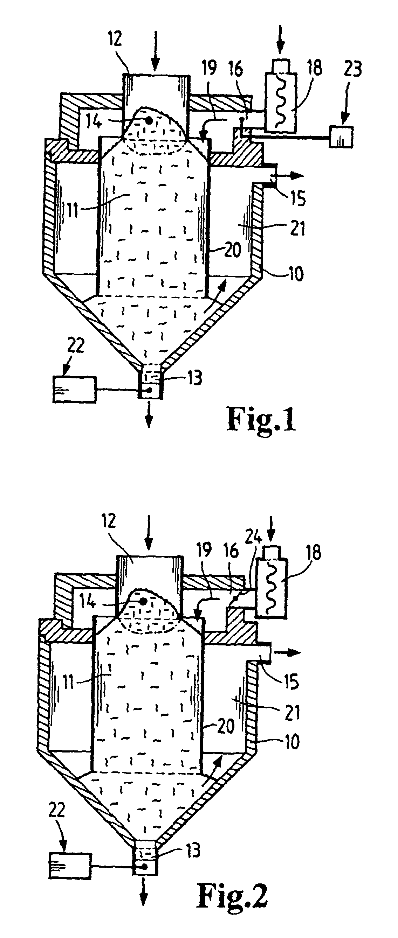

Figur 1 zeigt einen Behälter 10, in dem sich Kunststoffgranulat 11 befindet. Das Kunststoffgranulat wird durch den oberen Einfülltrichter 12 dem Behälter zugeführt. Im unteren Bereich ist ein Materialaustrittsstutzen 13 vorgesehen. Das Material kann hier unmittelbar einer Dosierschnecke oder einer Schleuse zugeführt werden. Es besteht auch die Möglichkeit, den Behälter 10 direkt mit einer Plastifiziereinheit zu verbinden. Das aufzuheizende Kunststoffgranulat 11 durchfließt den Behälter 10, wobei der Behälter im oberen Bereich nicht vom wärmeübertragenden Gas durchströmt wird. In diesem oberen Bereich wird mittels eines Temperatursensors 14 die Eintrittstemperatur des Kunststoffgranulates erfaßt. Der darunter liegende größere Bereich des Behälters 10 wird vom Wärmeträgergas durchströmt und die Temperatur des Granulats wird hier auf die gewünschte Endtemperatur gebracht. Wie bereits erwähnt, verläßt das Granulat den Behälter über ein entsprechendes Austragselement.

Der Behälter verfügt weiterhin über einen Gasaustrittsstutzen 15, durch den das Wärmeträgergas dem Behälter entweicht, sowie einen Gaseintrittsstutzen 16, durch welchen das erforderliche Gas zugeführt wird. Voraussetzung für den Wärmeprozeß sind ein quasi kontinuierlicher Durchfluß von Granulat sowie eine Isolation des Außenmantels, um die Granulattemperatur gleichmäßig zu halten. In Abhängigkeit der Granulatgröße ist eine Mindestverweildauer im Behälter notwendig, um dieses bis zum Kern durchzuheizen. Die Verweildauer liegt in der Praxis im Bereich von 2 bis 5 Minuten. Das zugeführte Gas wird in einer Heizeinrichtung 18 auf die erforderliche Temperatur gebracht, durchströmt das Granulat gemäß dem Pfeil 19 und tritt zwischen der Behälterinnenwand 20 und dem trichterförmigen Abschnitt des Behälters 10 in den Außenbereich 21 des Behälters und von dort zu dem Gasaustrittsstutzen. Das Wärmeträgergas wird also in diesem Fall parallel zu dem Materialstrom geführt.

Am Materialaustrittsstutzen 13 ist ein Temperatursensor 22 angeordnet, dieser sensiert die Materialaustrittstemperatur. Am Gaseintrittsstutzen 16 ist ebenfalls ein Temperatursensor 23 angeordnet, dieser sensiert die Gaseintrittstemperatur. Beide Sensorsignale werden verknüpft und aus der Verknüpfung wird die Gaseintrittstemperatur derart variiert, daß die Materialaustrittstemperatur der Solltemperatur entspricht.

Figur 2 zeigt den in Figur 1 dargestellten Behälter mit einer etwas geänderten Regelphilosophie. Gleiche Teile sind mit gleichen Bezugszeichen versehen. Im Gaseintrittsstutzen 16 ist eine Drosselklappe 24 zur Regelung der Gasmenge vorgesehen. In Abhängigkeit von der Materialaustrittstemperatur, die vom Temperatursensor 22 ermittelt wird, erfolgt eine Regelung der Gasmenge mit der Drosselklappe 24 derart, daß auch hier - wie bei dem Beispiel gemäß Figur 1 - die Materialaustrittstemperatur der Solltemperatur entspricht.

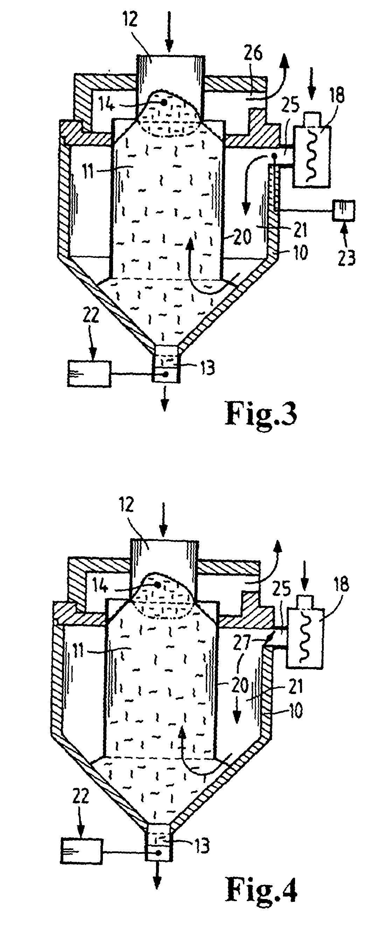

Figur 3 zeigt eine weitere Variante. Hier wird der Wärmeträgergasstrom gegen die Richtung des Materialstroms geführt. Der Gasstrom tritt über den Eintrittsstutzen 25 in den Außenbereich 21, durchströmt von unten nach oben das von oben zugeführte Granulat und verläßt anschließend über den Gasaustrittstutzen 26 den Behälter.

Figur 4 zeigt ebenfalls das in Figur 3 dargestellte Gegenstromprinzip, wobei über eine im Gaseintrittsstutzen 25 angeordnete Drosselklappe 27 die Gasmenge derart variiert wird, daß die Materialaustrittstemperatur, die über den Temperatursensor 22 gemessen wird, der Solltemperatur entspricht.

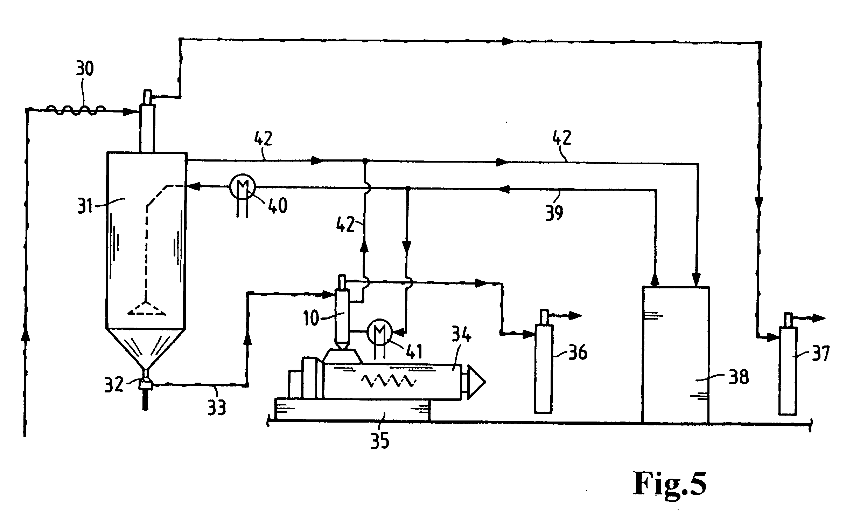

Figur 5 zeigt das Gesamtschaubild einer Kunststoffverarbeitungsanlage. Kunststoffgranulat wird über die Leitung 30 einem Kunststofftrocknungstrichter 31 zugeführt. Von dort gelangt es über die Austragsschleuse 32 und die Leitung 33 zu dem Behälter 10. Dieser Behälter ist unmittelbar über der Plastifizierschnecke 34 einer Spritzgießmaschine 35 angeordnet. Sowohl am Trocknungstrichter 31 als auch am Behälter 10 ist eine Unterdruckeinrichtung 36, 37 zum Transport des Kunststoffgranulats angeschlossen. Ein Trockner 38 erzeugt trockene Luft, führt diese über die Leitung 39 sowohl dem Behälter 10 als auch dem Kunststofftrocknungstrichter 31 zu. Die trockene Luft wird mit Heizeinrichtungen 40, 41 auf die entsprechende Temperatur vor Eintritt in das Kunststoffgranulat gebracht. Die Abluft aus dem Behälter 10 und aus dem Kunststofftrocknungstrichter 31 gelangt über die Leitung 42 wieder zurück zu dem Trockner 38, der eine Trocknung im geschlossenen Kreislauf vornimmt.

Im Rahmen dieser Kunststofftrocknungsanlage kann der Behälter 10 mit den gemäß Figuren 1 - 4 beschriebenen Anschlüssen und Ausgestaltungen versehen sein, so daß eine optimale Trocknung und eine rasche und materialschonende Erwärmung des Schüttgutes, d. h. des Kunststoffgranulats gewährleistet ist.

## Patentansprüche

1. Verfahren zum Aufheizen von Schüttgütern, insbesondere Kunststoffgranulat, wobei das Schüttgut (11) einem Behälter (10) zugeführt wird und diesen Behälter mit einer Solltemperatur verbrauchsabhängig verläßt, wobei ein Wärmeträgergasstrom ebenfalls dem Behälter (10) zugeführt wird und dieser Wärmeträgergasstrom in Richtung des Materialstroms oder gegen die Richtung des Materialstroms geführt ist und der Gasstrom pro Zeiteinheit oder die Gaseintrittstemperatur konstant ist und in Abhängigkeit von Materialdurchsatzmenge und Materialeintrittstemperatur die Gaseintrittstemperatur oder die Gasmenge derart variiert wird, daß die Materialaustrittstemperatur der Solltemperatur entspricht.

2. Verfahren nach Anspruch 1, **dadurch gekennzeichnet, daß** die Regelgröße zur Variation der Gastemperatur oder der Gasmenge von einem Temperaturfühler (23) in der Abluft des Wärmeträgergases ermittelt wird.

3. Verfahren nach einem der vorherigen Ansprüche, **dadurch gekennzeichnet, daß** die Regelgröße zur Variation von Gastemperatur oder Gasmenge von einem Materialtemperaturfühler (22) im unteren, nicht vom Gas durchströmten Bereich des Behälters ermittelt wird.

4. Verfahren nach einem der vorherigen Ansprüche, **dadurch gekennzeichnet, daß** der Behälter über eine dynamische Isolation (21) verfügt, die derart ausgeführt ist, daß die abströmende Prozeßluft über die Außenhülle des Behälters geführt ist.

## Claims

1. Method for heating up bulk materials, more especially granular plastics material, wherein the bulk materials (11) are supplied to a container (10) and leave this container at a required temperature depending on the use, wherein a heat-transfer gas flow is also supplied to the container (10) and this heat-transfer gas flow is guided in the direction of the material flow or in opposition to the direction of the material flow and the gas flow is per unit time or the gas inlet temperature is constant and, in dependence on the material throughput rate and material inlet temperature, the gas inlet temperature or the gas quantity is varied in such a manner that the material outlet temperature corresponds to the required temperature.

2. Method according to claim 1, **characterised in that** the controlled variable for varying the gas temperature or the gas quantity is determined by a temperature sensor (23) in the exhaust air of the heat transfer gas.

3. Method according to one of the previous claims, **characterised in that** the controlled variable for varying the gas temperature or gas quantity is determined by a material temperature sensor (22) in the lower region of the container, which is not traversed by the gas.

4. Method according to one of the previous claims, **characterised in that** the container includes a dynamic insulation (21), which is configured in such a manner that the outgoing process air is guided over the outer cover of the container.

## Revendications

1. Procédé de chauffage de produits en vrac, en particulier de granulés de matière plastique, selon lequel le produit en vrac (11) est transporté vers un réservoir (10) et quitte ce réservoir en fonction de la consommation avec une température de consigne, un flux de gaz caloporteur alimente également le réservoir (10), étant transporté dans la direction identique ou opposée à celle du flux de matière, le débit de gaz ou sa température d'entrée étant constants, et la température d'entrée du gaz ou la quantité de gaz varie en fonction du débit de matière ou de la température d'entrée de la matière, de telle sorte que la température de sortie de la matière correspond à la température de consigne.

2. Procédé selon la revendication 1,
**caractérisé en ce que**
la grandeur de régulation pour la variation de la température du gaz ou de la quantité de gaz est déterminée par un capteur de température (23) présent dans l'air d'extraction du gaz caloporteur.

3. Procédé selon l'une des revendications précédentes,
**caractérisé en ce que**
la grandeur de régulation pour la variation de la température du gaz ou de la quantité de gaz est déterminée par un capteur de température de la matière (22) présent dans la zone inférieure du réservoir non traversée par le gaz.

4. Procédé selon l'une des revendications précédentes,
**caractérisé en ce que**
le réservoir dispose d'une isolation dynamique (21), configurée pour que l'air de service évacué soit passé par l'enveloppe extérieure du réservoir.
